# EUROPEAN PATENT SPECIFICATION

(11) **EP 2 933 532 B1**
(45) Date of publication and mention of the grant of the patent: **05.07.2023**
(21) Application number: 15163340.1
(22) Date of filing: 13.04.2015
(51) Int. Cl.: F16H 1/32

(54) **ECCENTRIC REDUCER**
EXZENTRISCHES REDUZIERSTÜCK
RÉDUCTEUR EXCENTRIQUE

(30) Priority: 18.04.2014 JP 2014086533
(43) Date of publication of application: 21.10.2015
(73) Proprietor: Nabtesco Corporation, Tokyo 102-0093 (JP)
(72) Inventor: Komori, Hirofumi, Fuwa-gun, Gifu (JP)
(74) Representative: Grünecker Patent- und Rechtsanwälte PartG mbB

(56) References cited:
- EP-A2- 1 296 084
- JP-A- 2006 283 983
- JP-A- 2010 014 238
- JP-A- 2010 014 241
- JP-A- 2011 064 219
- US-B2- 7 553 249

## Description

### TECHNICAL FIELD

The present invention relates to an eccentric reducer having a carrier composed at least two members fastened to each other.

### BACKGROUND ART

A reducer which is configured to output a large torque from a power source, such as an electric motor, is known in the prior art, as disclosed e.g. in patent document 1. When a driving motor as a power source rotates in such a reducer, a crank shaft rotates via an input shaft, a driven external gear, etc. In conjunction with the rotation of the crank shaft, the load of an eccentric portion secured to the crank shaft acts on a pinion (external-tooth gear), whereby the external-tooth gear rotates eccentrically and the crank shaft, rotatably held by the external-tooth gear, revolves while rotating. The revolving movement of the crank shaft rotates a carrier that rotatably holds the crank shaft. A large torque can thus be obtained from a transmission gear secured to the carrier.

The carrier of the reducer disclosed in patent document 1 comprises a base portion (first carrier member) and an end plate portion (second carrier member) which are fixed to each other by pin members and bolts (fastening section). Each pin member is pressed into pin holes, formed in both the base carrier and the end carrier, such that it straddles the two pin holes. Each bolt is threaded into screw holes, formed in the base carrier and in the end carrier, such that it straddles the two holes. In this manner, the two carriers are firmly fixed to each other.
Patent document 2 discloses an eccentric reducer according to the preamble of independent claim 1.

### Prior Art Document

### Patent Document

Patent document 1: Japanese Patent Laid-Open Publication No. 2006-283983
Patent document 2: JP 2010 014241 A

### SUMMARY OF THE INVENTION

When pin members are merely pressed into pin holes as described above, the pin members can escape from the holes for some reason. In view of this, it is conceivable to beat the outer peripheries of the holes after pressing the pin members into the holes, thereby deforming the holes inward to prevent escape of the pin members from the holes. This method, however, has the drawback that it is very difficult to control the amount of deformation of each hole; the deformation can sometimes be insufficient. There is, therefore, a fear of failing to prevent escape of the pin members from the holes.

The present invention has been made to solve the above problem, and it is an object of the present invention to provide an eccentric reducer which can securely prevent pin members, which have been pressed into pin holes to fix a first carrier member and a second carrier member to each other, from escaping from the pin holes.

In order to achieve the object, the present invention provides an eccentric reducer as defined in independent claim 1. Preferred embodiments are laid down in the dependent claims.

According to the present invention, the first carrier member and the second carrier member are firmly fixed to each other by means of the pin member and the fastening section, being a bolt and a washer. This provides the carrier composed of the first carrier member and the second carrier member firmly fixed to each other. Further, at least part of the opening of the through-hole, into which the pin member has been inserted, is covered by a portion of the fastening member. If, for some reason, the pin member is moved in a direction exiting the through-hole, the pin member is stopped by the portion of the fastening section. Thus, the portion of the fastening section functions as a cover portion which prevents the pin member, which has been pressed into the through-hole, from escaping from the through-hole.

The eccentric reducer of the present invention can therefore securely prevent the pin member, which has been pressed into the pin holes to fix the first carrier member and the second carrier member to each other, from escaping (coming off) from the pin holes.

Further, according to the eccentric reducer of the present invention, a part of the fastening section for fixing the two carrier members to each other is provided as a cover portion. This can prevent escape of the pin member from the pin holes without the need for provision of a separate member as a cover to prevent escape of the pin member.

In a preferred embodiment of the present invention, the bolt further includes a screw head formed integrally with the screw body, and the washer is held between the screw head and the second carrier member, and is provided as said cover portion.

The eccentric reducer of this embodiment can prevent escape of the pin member from the pin holes by means of the washer provided as a part of the fastening section. Because washers can be produced e.g. by punching with a press, there is a relatively small variation in the size between washers. This enables the washer to more securely cover part of the pin through-hole into which the pin member has been inserted, thereby more securely preventing escape of the pin member from the pin through-hole.

In a preferred embodiment of the present invention, the bolt further includes a screw head formed integrally with the screw body, the screw head being provided as said cover portion.

The eccentric reducer of this embodiment can prevent escape of the pin member from the pin holes by means of the screw head. Because of a relatively small variation in the size, a screw head can more securely prevent escape of the pin member from the holes.

In a preferred embodiment of the present invention, the carrier includes a plurality of pin members, and said cover portion covers at least part of the opening of each of a plurality of through-holes into which the pin members have been inserted. According to this embodiment, one cover portion can prevent escape of a plurality of pin members from the pin holes.

The eccentric reducer of the present invention can securely prevent the pin member(s), which has been pressed into the pin holes to fix the first carrier member and the second carrier member to each other, from escaping from the pin holes.

### BRIEF DESCRIPTION OF THE DRAWINGS

FIG. 1 is a partial cross-sectional view, taken along the line I-I of FIG. 2, of an eccentric reducer according to an embodiment of the present invention, illustrating the internal structure of the eccentric reducer;
FIG. 2 is a diagram showing a positional relationship between a fastening section and pin members as they are viewed in the direction of arrow II shown in FIG. 1, with only the outlines of components, such as a case and an end carrier, being depicted;
FIG. 3 is an enlarged view of the fastening section and the pin members, shown in FIG. 2; and
FIG. 4 is a cross-sectional view taken along the line IV-IV of FIG. 3.

### DESCRIPTION OF THE PREFERRED EMBODIMENTS

Preferred embodiments of the present invention will now be described with reference to the drawings. An eccentric reducer 1 according to an embodiment of the present invention is suitable for use in, for example, a yaw-drive device for yaw-driving a nacelle to rotate it with respect to a tower of a wind turbine, or a pitch-drive device for pitch-driving the shaft of a blade with respect to a nacelle-side hub. The eccentric reducer 1 of this embodiment is usable not only in a wind turbine, but in a variety of industrial machines or construction machines as well.

### [Overall Construction]

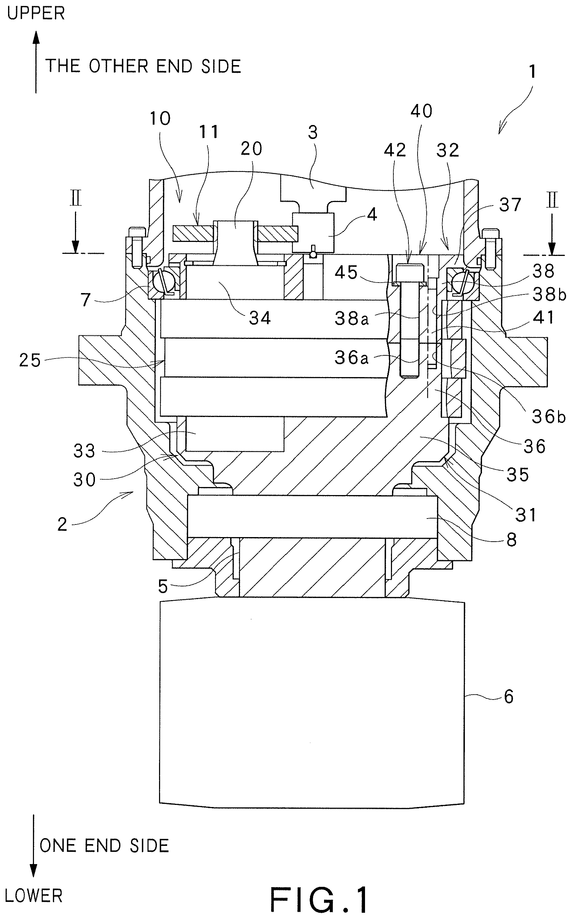

FIG. 1 is a partial cross-sectional view of the eccentric reducer 1 of this embodiment. The eccentric reducer 1 is configured to reduce the speed of rotation inputted from a motor (not shown), and transmit and output the reduced rotation. The eccentric reducer 1 includes a case 2, in input gear 4 as a driving gear 4, a reducing section 10, an output shaft 5, etc.

As shown in FIG. 1, at the lower one end of the eccentric reducer 1, a pinion 6 is formed integrally with the output shaft 5 which projects from the case 2, and a motor (not shown) is mounted to the case 2 at the upper other end of the eccentric reducer 1. In the eccentric reducer 1, the rotation inputted from the motor is reduced by the reducing section 10, and the torque is transmitted and outputted to the pinion 6 of the output shaft 5. In the following description, the lower side or the output side of the eccentric reducer 1 shown in FIG. 1, where the output shaft 5 is disposed, may be referred to as one-end side, while the upper side or the input side of the eccentric reducer 1, where the motor is mounted, may be referred to as the other-end side. The other-end side may sometimes be referred to as the upper side or upper, while the one-end side may sometimes be referred to as the lower side or lower.

As shown in FIG. 1, the case 2 consists of a plurality of case members which are fastened to each other, and has a vertically-extending generally-cylindrical shape. The reducing section 10, etc. are housed in the case 2. Vertically-extending pin internal teeth (not shown) are arranged on the inner peripheral surface of the case 2 at regular intervals along the circumferential direction of the case 2. The pin internal teeth are configured to engage the below-described external-tooth gears 25.

The input gear 4 is comprised of a short shaft-shaped gear member and formed integrally with the rotating shaft 3 of the motor. The rotating shaft 3 of the motor is provided as an input shaft to which the rotary driving force of the motor is inputted. A gear portion that engages the teeth portions of spur gears 11 of the reducing section 10 is formed in the peripheral surface of the input gear 4 . The input gear 4 is configured to input the rotary driving force from the motor to the spur gears 11.

The reducing section 10 comprises the spur gears 11, crank shafts 20, external-tooth gears 25 as a gear section 25, a carrier 30, etc.

The spur gear 11 are provided as driven gears which are driven by the input gear 4. A plurality of (four in this embodiment) spur gears 11 that engage the teeth portion of the input gear 4 are disposed around the input gear 4. The spur gears 11 are arranged at regular intervals (90-degree intervals in this embodiment) along the circumferential direction of the input gear 4. The spur gears 11 are in spline engagement with the crank shafts 20.

A plurality of (four in this embodiment) crank shafts 20 are arranged at regular intervals along the circumferential direction of the inner periphery of the case 2. Each crank shaft 20 is disposed such that it penetrates through a crank hole (not shown) formed in each of the external-tooth gears 25, and is configured as a shaft member which, when rotated, eccentrically rotates the external-tooth gears 25. Each crank shaft 20 makes a revolving movement in conjunction with the rotation of the external-tooth gears 25 caused by the rotation of the crank shaft 20. The spur gears 11 are each mounted to an upper portion of each crank shaft 20.

The external-tooth gears 25 are vertically arranged parallel to each other and housed in the case 2. The crank shafts 20 are inserted into the external-tooth gears 25 at regular intervals in the circumferential direction.

External teeth (not shown) that engage the pin internal teeth are formed in the outer periphery of each external-tooth gear 25. Thus, each external-tooth gear 25 constitutes a gear having the external teeth that engage the pin internal teeth. The number of the external teeth of each external-tooth gear 25 is smaller by at least one than the number of the pin internal teeth. Accordingly, the position of engagement between the external teeth and the pin internal teeth is displaced every time each crank shaft 20 rotates 360 degrees, whereby the external-tooth gears 25 oscillate and rotate eccentrically. The external-tooth gears 25 rotatably hold the crank shafts 20 by means of external-tooth bearings (not shown).

### [Construction of Carrier]

The carrier 30 rotatably holds the external-tooth gears 25 by means of crank bearings 33, 34, and is rotatably held by carrier bearings 7, 8. The carrier 30 comprises an assembly of a base carrier 31 as a first carrier member 31, an end carrier 32 as a second carrier member 32 , a plurality of pin members 41, a plurality of fastening sections 40, etc.

The base carrier 31 includes a disk portion 35 and a plurality of (four in this embodiment) support post portions 36, which are formed integrally. The disk portion 35 is a generally disk-shaped portion having a somewhat large vertical thickness. The support post portions 36 extend upward from the disk portion 35.

Each support post portion 36 has one bolt hole 36a as a first screw hole 36a and two bottomed pin holes 36b as bottomed holes 36b. The bolt hole 36a extends downward from the upper surface of the support post portion 36. A female screw is formed in the inner peripheral surface of the bolt hole 36a. As with the bolt hole 36a, each bottomed pin hole 36b extends downward from the upper surface of the support post portion 36. The inner periphery of each bottomed pin hole 36b has a circular shape in a cross-section perpendicular to a direction in which the bottomed pin hole 36b extends.

The end carrier 32 includes a disk portion 37 and a plurality of (four in this embodiment) support post portions 38, which are formed integrally. The disk portion 37 is a generally disk-shaped portion having a somewhat large vertical thickness. The support post portions 38 extend downward from the disk portion 37.

Each support post portion 38 has one bolt hole 38a as a second screw hole 38a and two pin through-holes 38b as through holes 38b. When the base carrier 31 and the end carrier 32 are vertically stacked, the bolt hole 38a and each pin through-hole 38b of each support post portion 38 overlap with the corresponding bolt hole 36a and bottomed pin hole 36b.

The bolt hole 38a vertically penetrates through the support post portion 38. A female screw is formed in the inner peripheral surface of the bolt hole 38a. The diameter of the bolt hole 38a is equal to the diameter of the bolt hole 36a formed in the base carrier 31. As with the bolt hole 38a, each pin through-hole 38b vertically penetrates through the support post portion 38. The inner periphery of each pin through-hole 38b has a circular shape in a cross-section perpendicular to a direction in which the pin through-hole 38b extends. The diameter of each pin through-hole 38b is equal to the diameter of each bottomed pin hole 36b.

The pin members 41 each have a round rod-like shape. The diameter of each pin member 41 is somewhat larger than the diameter of each bottomed pin hole 36b and the diameter of each pin through-hole 38b. When the base carrier 31 and the end carrier 32 are vertically stacked, each pin member 41 is pressed into the bottomed pin hole 36b and the pin through-hole 38b such that it straddles the two holes. The base carrier 31 and the end carrier 32 can be fixed to each other in this manner.

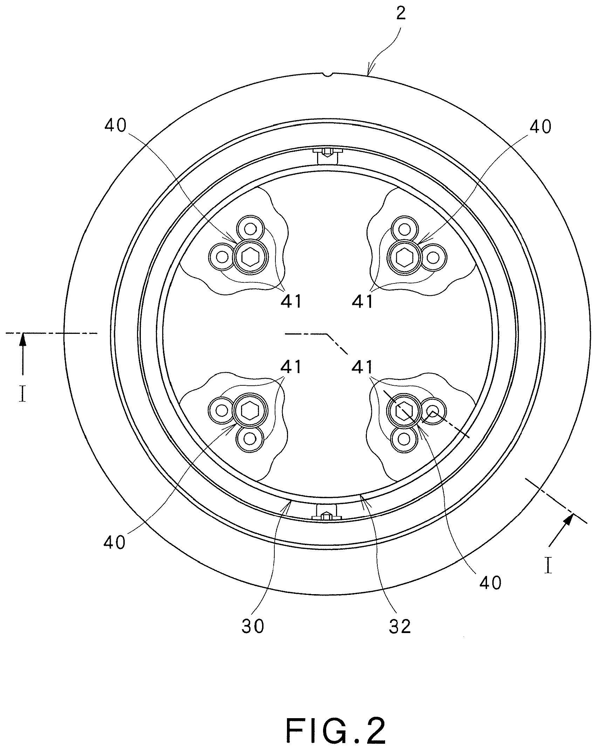

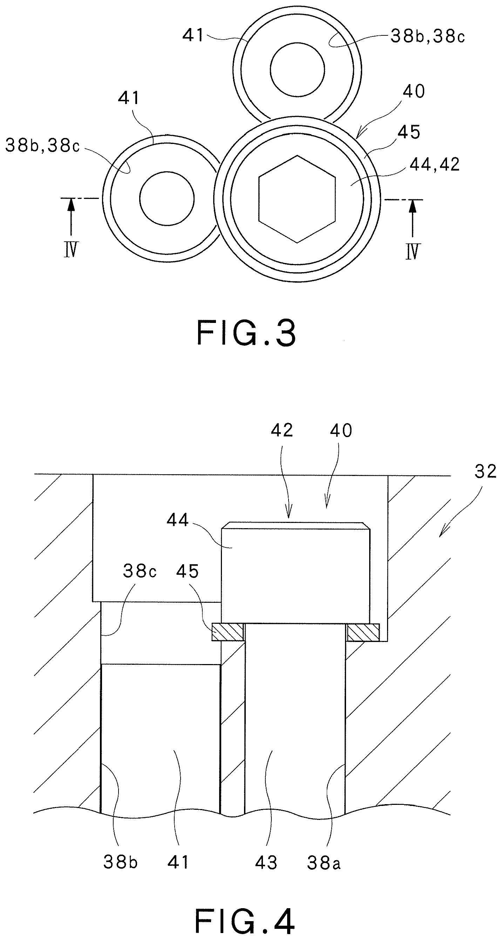

FIG. 2 is a diagram showing a positional relationship between a fastening section 40 and pin members 41 as they are viewed in the direction of arrow II shown in FIG. 1, with only the outlines of components, such as the case 2 and the end carrier 32, being depicted. FIG. 3 is an enlarged view of the fastening section 40 and the pin members 41, shown in FIG. 2. FIG. 4 is a cross-sectional view taken along the line IV-IV of FIG. 3. Each fastening section 40 includes a bolt 42 and a washer 45.

As shown in FIG. 4, the bolt 42 consists of a screw body 43 and a screw head 44 which are formed integrally. The screw body 43 has a round rod-like shape. On the peripheral surface of the screw body 43 is formed a male screw that engages the female screws formed in the inner peripheral surfaces of the bolt holes 36a, 38a. The screw head 44 is formed integrally with one end of the screw body 43, and has a diameter which is larger than the diameter of the screw body 43. When the base carrier 31 and the end carrier 32 are vertically stacked, each bolt 42 is inserted into the bolt holes 36a, 38a and screws on the holes. The base carrier 31 and the end carrier 32 can be firmly fixed to each other in this manner. The bolt 42 is inserted into the bolt holes 36a, 38a, with the screw body 43 being inserted into the washer 45.

The washer 45 is an annular member having a relatively small thickness. When the screw body 43 is in screw engagement with the bolt holes 36a, 38a, the washer 45 is held between the screw head 44 and the end carrier 32. The outer diameter of the washer 45 is larger than the diameter of the screw head 44.

As shown in FIGS. 3 and 4, when the washer 45 is held between the screw head 44 and the end carrier 32, the washer 45 covers part of the opening 38c of an adjacent pin through-hole 38b into which a pin member 41 has been inserted. Thus, in this embodiment, the washer 45 is provided as a cover portion that covers at least part of the opening 38c of the pin through-hole 38b. Further, in this embodiment, each washer 45 covers part of the opening 38c of each of adjacent two pin through-holes 38b, as shown in FIG. 3.

The output shaft 5 is provided integrally with the end carrier 31 and extends downward from a central portion of the end carrier 31. As shown in FIG. 1, the output shaft 5, at its end with which the pinion 6 is formed integrally, projects from the case 2.

### [Operation]

The operation of the above-described eccentric reducer 1 will now be described. The eccentric reducer 1 operates by the operation of a not-shown motor. In particular, the input gear 4 starts to rotate when the operation of the motor is started. When the input gear 4 rotates, the spur gears 11 in engagement with the input gear 4 rotate and the crank shafts 20, to which the spur gears 11 are secured, rotate. In conjunction with the rotation of the crank shafts 20, the external-tooth gears 25 oscillate and rotate eccentrically while displacing the position of engagement with the pin internal teeth. In conjunction with the eccentric rotation of the external-tooth gears 25, the crank shafts 20, rotatably held by the external-tooth gears 25, each make a revolving movement while rotating. The revolving movement of each crank shaft 20 rotates the carrier 30 which rotatably holds the one-end side and the other-end side of each crank shaft 20 in the base carrier 31 and in the end carrier 32, respectively. The rotation of the carrier 30 rotates the output shaft 5 provided integrally with the base carrier 31, whereby a large torque is outputted from the pinion 6.

Generally in an eccentric reducer, in order to fasten a base carrier 31 and an end carrier 32 to each other, each of pin members 41 is pressed into holes, which are formed in both the carrier members 31, 32, such that the pin member 41 straddles the two holes. In order to prevent the pin members 41 from escaping (coming off) from the holes, it is a conventional practice to beat the outer peripheries of the holes into which the pin members 41 have been inserted, thereby deforming the holes inward. This method, however, has the drawback that it is very difficult to control the amount of deformation of each hole; the deformation can sometimes be insufficient. There is, therefore, a fear of failing to prevent escape of a pin member 41 from the holes.

On the other hand, according to the eccentric reducer 1 of this embodiment, the cover portion (washer 45), provided as a part of the fastening section 40, covers part of the through-hole 38b into which a pin member 41 has been inserted. If, for some reason, the pin member 41 is moved in a direction exiting the through-hole 38b, the pin member 41 is stopped by the washer 45. This can securely prevent escape (coming off) of the pin member 41 from the holes.

### [Advantageous Effects]

As described hereinabove, the eccentric reducer 1 of this embodiment can securely prevent the pin members 41, which have been pressed into the holes to fix the base carrier 31 and the end carrier 32 to each other, from escaping from the holes.

In the eccentric reducer 1, a part (the washer 45 in this embodiment) of each fastening section 40 for fixing the two carrier members 31, 32 to each other is provide as a cover portion. This can prevent escape of a pin member 41 from the holes without the need for provision of a separate member as a cover to prevent escape of the pin member 41.

The eccentric reducer 1 can prevent escape of a pin members 41 from the holes by means of the washer 45 provided as a part of the fastening section 40. Because washers 45 can be produced e.g. by punching with a press, there is a relatively small variation in the size between the washers 45. This enables a washer 45 to more securely cover part of the pin through-hole 38b into which a pin member 41 has been inserted, thereby more securely preventing escape of the pin member 41 from the pin through-hole 38b.

According to the eccentric reducer 1, one washer 45 can prevent escape of a plurality of pin members 41 from the holes.

While the present invention has been described with reference to preferred embodiments, it is understood that the present invention is not limited to the embodiments described above, but is capable of various changes and modifications within the scope of the inventive concept as expressed herein. The following are exemplary modifications:

(1) Though in the above-described embodiment the washer 45 is provided as a cover portion to prevent escape of a pin member 41 from the holes, the present invention is not limited to this feature. For example, a screw head of a fastening section having no washer (i.e. fastening section consisting of a bolt) may be provided as a cover portion. Because of a relatively small variation in the size, a screw head can more securely prevent escape of a pin member 41 from the holes.

(2) Though in the above-described embodiment one washer 45 covers part of each of two pin through-holes 38b, the present invention is not limited to this feature: one washer 45 may cover one pin through-hole 38b or three or more pin through-holes 38b.

### INDUSTRIAL APPLICABILITY

The present invention can find wide application as an eccentric reducer having a carrier composed of at least two members fastened to each other.

### DESCRIPTION OF THE REFERENCE NUMERALS

1 eccentric reducer
2 case
3 rotating shaft
4 input gear (driving gear)
5 output shaft
6 pinion
7 carrier bearing
8 carrier bearing
10 reducing section
11 spur gears
20 crank shaft
25 external-tooth gear (gear section)
30 carrier
31 base carrier (first carrier member)
32 end carrier (second carrier member)
36a bolt hole (first screw hole)
36b bottomed pin hole (bottomed hole)
38a bolt hole (second screw hole)
38b pin through-hole (through-hole)
40 fastening section
41 pin member
43 screw body
44 screw head
45 washer (cover portion)

## Claims

1. An eccentric reducer (1) comprising: a gear section (25) that rotates in conjunction with the rotation of a driving gear (4) to which a driving force is inputted; a carrier (30) that rotatably holds the gear section (25); and an output shaft (5) that rotates together with the carrier (30),
wherein the carrier (30) includes a first carrier member (31) disposed on one side in a direction in which the output shaft (5) extends, a second carrier member (32) disposed on the other side in the direction in which the output shaft (5) extends and fixed to the first carrier member (31),
a pin member (41) which is pressed into a bottomed hole (36b) formed in the first carrier member (31) and a through-hole (38b) formed in the second carrier member (32) such that it straddles the two holes (36b, 38b), and
a fastening section (40) being a bolt (42) or a bolt (42) and a washer (45), and including a screw body (43) which is threaded into a first screw hole (36a) formed in the first carrier member (31) and a second screw hole (38a) formed in the second carrier member (32) such that it straddles the two holes (36a, 38a),
wherein the pin member (41) and the fastening section (40) have different center axes,
**characterized in that**
a portion of the fastening section (40) is provided as a cover portion that covers, as being viewed in an axial direction of the screw body (43), at least part of an opening of the through-hole (38b) into which the pin member (41) is inserted.

2. The eccentric reducer (1) according to claim 1,
wherein the fastening section (40) is the bolt (42) and the washer (45),
wherein the bolt (42) further includes a screw head (44) formed integrally with the screw body (43), and wherein the washer (45) is held between the screw head (44) and the second carrier member (32), and provided as said cover portion.

3. The eccentric reducer (1) according to claim 1,
wherein the bolt (42) further includes a screw head (44) formed integrally with the screw body (43), the screw head (44) being provided as said cover portion.

4. The eccentric reducer (1) according to any one of claims 1 to 3,
wherein the carrier (30) includes a plurality of pin members (41), and said cover portion covers at least part of the opening of each of a plurality of through-holes (38b) into which the pin members (41) are inserted.

## Patentansprüche

1. Exzentrische Reduktionsvorrichtung (1), umfassend: einen Getriebeabschnitt (25), der sich in Verbindung mit der Drehung eines Antriebsgetriebes (4) dreht, an welchem eine Antriebskraft eingeleitet wird; einen Träger (30), der den Getriebeabschnitt (25) drehbar hält; und eine Ausgangswelle (5), die sich zusammen mit den Träger (30) dreht,
wobei der Träger (30) ein erstes Trägerelement (31) umfasst, das auf einer Seite in einer Richtung angeordnet ist, in welcher sich die Ausgangswelle (5) erstreckt, ein zweites Trägerelement (32), das auf der anderen Seite in der Richtung angeordnet ist, in welcher sich die Ausgangswelle (5) erstreckt und an dem ersten Trägerelement (31) befestigt ist,
ein Stiftelement (41), welches in ein Loch (36b) mit Boden, das in dem ersten Trägerelement (31) ausgebildet ist und ein Durchgangsloch (38b) gepresst ist, das in dem zweiten Trägerelement (32) ausgebildet ist, so dass es die beiden Löcher (36b, 38b) überspannt,
einen Befestigungsabschnitt (40), der eine Schraube (42) oder eine Schraube (42) und eine Beilagscheibe (45) ist, und einen Schraubenkörper (43) umfasst, der in ein erstes Schraubenloch (36a), das in dem ersten Trägerelement (31) ausgebildet ist und ein zweites Schraubenloch (38a) geschraubt ist, das in dem zweiten Trägerelement (32) ausgebildet ist, so dass er die zwei Löcher (36a, 38a) überspannt,
wobei das Stiftelement (41) und der Befestigungsabschnitt (40) unterschiedliche Mittelachsen aufweisen,
**dadurch gekennzeichnet, dass**
ein Teil des Befestigungsabschnitts (40) als ein Abdeckungsabschnitt bereitgestellt ist, der in einer axialen Richtung des Schraubenkörpers (43) gesehen mindestens einen Teil einer Öffnung des Durchgangslochs (38b) bedeckt, in welchem das Stiftelement (41) eingesetzt ist.

2. Die exzentrische Reduktionsvorrichtung (1) nach Anspruch 1,
wobei der Befestigungsabschnitt (40) die Schraube (42) und die Beilagscheibe (45) ist,
wobei die Schraube (42) ferner einen Schraubenkopf (44) umfasst, der einstückig mit dem Schraubenkörper (43) ausgebildet ist, und wobei die Beilagscheibe (45) zwischen dem Schraubenkopf (44) und dem zweiten Trägerelement (32) gehalten wird und als der Abdeckungsabschnitt bereitgestellt ist.

3. Die exzentrische Reduktionsvorrichtung (1) nach Anspruch 1,
wobei die Schraube (42) ferner einen Schraubenkopf (44) umfasst, der einstückig mit dem Schraubenkörper (43) ausgebildet ist, wobei der Schraubenkopf (44) als der Abdeckungsabschnitt bereitgestellt ist.

4. Die exzentrische Reduktionsvorrichtung (1) nach einem der Ansprüche 1 bis 3,
wobei der Träger (30) eine Vielzahl von Stiftelementen (41) umfasst, und der Abdeckungsabschnitt mindestens einen Teil der Öffnung von jedem von einer Vielzahl von Durchgangslöcher (38b) bedeckt, in die die Stiftelemente (41) eingesetzt sind.

## Revendications

1. Réducteur excentré (1) comprenant : une section de pignon (25) qui tourne en même temps que la rotation d'un engrenage d'entraînement (4) sur lequel est appliquée une force d'entraînement, un support (30) qui soutient en rotation la section de pignon (25) et un arbre de sortie (5) qui tourne avec le support (30),
dans lequel le support (30) inclut un premier élément de support (31) disposé sur un côté dans une direction dans laquelle s'étend l'arbre de sortie (5), un second élément de support (32) disposé sur l'autre côté dans la direction laquelle s'étend l'arbre de sortie (5) et qui est fixé au premier élément de support (31),
un élément formant broche (41) qui est comprimé dans un alésage avec fond (36b) formé dans le premier élément de support (31) et un alésage traversant (38b) formé dans le second élément de support (32) de sorte à ce qu'il chevauche les deux alésages (36b, 38b), et
une section de fixation (40) représentée par un boulon (42), ou par un boulon (42) et une rondelle (45), et incluant un corps de vis (43) qui est vissé dans un premier alésage de vissage (36a) formé dans le premier élément de support (31) et un second alésage de vissage (38a) formé dans le second élément de support (32) de sorte à ce qu'il chevauche les deux alésages (36a, 38a),
dans lequel l'élément formant broche (41) et la section de fixation (40) présentent des axes centraux différents,
**caractérisé en ce que :**
une partie de la section de fixation (40) est prévue sous forme de protection qui recouvre, lorsqu'on la regarde dans la direction axiale du corps de vis (43), au moins une partie d'une ouverture de l'alésage traversant (38b) dans lequel est inséré l'élément formant broche (41).

2. Réducteur excentré (1) selon la revendication 1,
dans lequel la section de fixation (40) est le boulon (42) et la rondelle (45),
où le boulon (42) inclut en outre une tête de vis (44) formée en une seule pièce avec le corps de vis (43), et où la rondelle (45) est maintenue entre la tête de vis (44) et le second élément de support (32), et est utilisée comme dite partie de protection.

3. Réducteur excentré (1) selon la revendication 1,
dans lequel le boulon (42) inclut en outre une tête de vis (44) formée en une seule pièce avec le corps de vis (43), la tête de vis (44) étant utilisée comme dite partie de protection.

4. Réducteur excentré (1) selon l'une quelconque des revendications 1 à 3,
dans lequel le support (30) inclut une pluralité d'éléments de broches (41) et ladite partie de protection recouvre au moins une partie de l'ouverture de chacun d'une pluralité d'alésages traversants (38b) dans lesquels sont insérés les éléments de broches (41).
